**Europäisches Patentamt**

**European Patent Office**

**Office européen des brevets**

(19)

(11) Veröffentlichungsnummer: **0 137 075**
**B1**

(12) **EUROPÄISCHE PATENTSCHRIFT**

(45) Veröffentlichungstag der Patentschrift:
**07.01.88**

(21) Anmeldenummer: **83110238.9**

(22) Anmeldetag: **13.10.83**

(51) Int. Cl.⁴: **G 06 F 13/00,** G 11 B 23/00,
**G 06 F 1/00**

(54) **Verfahren zum Schutz von auf maschinenlesbaren Datenträgern aufgezeichneten Programmen vor unerlaubter Einsichtnahme und unerlaubtem Kopieren.**

(43) Veröffentlichungstag der Anmeldung:
**17.04.85 Patentblatt 85/16**

(45) Bekanntmachung des Hinweises auf die Patenterteilung:
**07.01.88 Patentblatt 88/1**

(84) Benannte Vertragsstaaten:
**AT BE CH DE FR GB IT LI NL SE**

(56) Entgegenhaltungen:
**WO - A - 82/01273**
**DE - A - 2 923 738**
**US - A - 4 168 396**

**IBM TECHNICAL DISCLOSURE BULLETIN, Band 20, Nr. 10, März 1978, Seiten 3986-3989, New York, US; W.F.EHRSAM u.a. "Cryptographic key authentication in file system"**
**PROCEEDINGS CARNAHAN CONFERENCE ON CRIME COUNTERMEASURES, 6.-8. April 1977, Lexington, Seiten 203-207; J.McLAUGHLIN: "Hardware approach to computer security"**

(73) Patentinhaber: **Seifert, Josef, Ger-Haupt-Ring 11/6, D-8000 München 83 (DE)**

(72) Erfinder: **Seifert, Josef, Ger-Haupt-Ring 11/6, D-8000 München 83 (DE)**

(74) Vertreter: **Diehl, Hermann O., Dr., Diehl & Kressin Flüggenstrasse 17, D-8000 München 19 (DE)**

## Beschreibung

Die Erfindung betrifft ein Verfahren zum Schutz von Programmen vor unerlaubter Einsichtnahme und unerlaubtem Kopieren nach dem Oberbegriff des Hauptanspruchs.

Programme für Datenverarbeitungsanlagen (die sogenannte Software) werden auf maschinenlesbaren Trägern vertrieben, beispielsweise Bändern oder Disketten, die leicht durch Unbefugte zu kopieren sind. Der dadurch entstehende wirtschaftliche Schaden, der durch die hohen Herstellkosten von Programmen bedingt ist, zwingt dazu, neben dem rechtlichen Schutz von Programmen auch technische Vorkehrungen zu ergreifen, die es verhindern, dass Programme auf einfache Weise durch die sogenannten Software-Piraten kopiert werden können.

Zu diesem Zweck sind Zusatzeinrichtungen für Datenverarbeitungsanlagen bekannt geworden, mit denen die vom Hersteller verschlüsselten Programme für die Ausführung wieder entschlüsselt werden. Dieses Vorgehen erfordert jedoch einen verhältnismässig grossen Schaltungsaufwand und ist insbesondere für kleine Datenverarbeitungsanlagen, die sog. Mikrocomputersysteme, nicht ohne weiteres tragbar.

Zum Schutz von Programmen gegen unerlaubtes Kopieren wurden bisher auch schon Identifikationen des jeweiligen Programmkäufers (z.B. die Kunden-Nummer) in die Programme eingebaut, um bei auftauchenden Raubkopien deren Quelle feststellen zu können. Solange diese Identifikationen aber erkennbar sind, können sie vor einem unerlaubten Kopiervorgang gelöscht oder geändert werden.

Die vorliegende Erfindung stellt sich daher die Aufgabe, ein Verfahren zum Schutz von Programmen vor unerlaubter Einsichtnahme und unerlaubtem Kopieren anzugeben, das bei geringem Aufwand beim Hersteller und ohne Eingriff in bestehende Datenverarbeitungsanlagen für alle Programme anwendbar ist, eine Dechiffrierung der geschützten Programme möglichst zuverlässig verhindert, eine sichere Identifikation von trotzdem vorkommenden Raubkopien ermöglicht, vom Anwender keinen Aufwand erfordert und die normale Programmausführung in keiner Weise stört.

Diese Aufgabe wird durch die im Anspruch 1 gekennzeichnete Erfindung gelöst; Ausgestaltungen der Erfindung sind in den abhängigen Ansprüchen gekennzeichnet.

Die nach dem hier vorgeschlagenen Verfahren geschützten Programme werden um ein Chiffrier- und Dechiffrierprogramm ergänzt und in chiffrierter Form vertrieben. Beim Anwender erfolgt vor jeder Programmausführung die Dechiffrierung des in den Computer geladenen Programms, ohne dass dazu der sonst übliche Programmablauf abgeändert wird; der Anwender merkt nicht einmal, ob er ein Programm im Klartext oder in chiffrierter Form geladen hat. Ein Teil des chiffrierten Adressgebiets bleibt bei einer derartigen Programmausführung unverändert, so dass dort Geheiminformation untergebracht werden kann. Nach der Dechiffrierung und vor der eigentlichen Programmausführung wird der gesamte an das Programm angehängte Dechiffrierzusatz inklusive dem Gebiet mit der Geheiminformation gelöscht, so dass nurmehr das nicht chiffrierte Programm vorhanden ist. Die Geheiminformation ist also in doppelter Weise geschützt: sie bleibt beim Dechiffrierprozess weiterhin chiffriert und wird ausserdem vor Programmausführung gelöscht. Zum Zugriff oder zum Löschen dieser Geheiminformation müssten also beide Sperrmechanismen überwunden werden.

Zur Chiffrierung und Dechiffrierung werden spezielle Maschinenbefehle des jeweiligen Prozessors mitverwendet, die im Repertoire des Assemblerprogramms fehlen, das für die Programmumwandlung herangezogen wird. Auf diese Weise ist es Dienstprogrammen, die aus einem Maschinenprogramm das ursprüngliche Assemblerprogramm wiederherstellen können (sog. Disassembler oder Debugger), nicht möglich, auf den jeweils verwendeten Chiffrieralgorithmus zu schliessen.

Die in dem nicht dechiffrierten und vor Programmausführung gelöschten Teil des Chiffrierprogramms enthaltene Information dient zur Identifikation der Herkunft einer nicht autorisierten Programmkopie. Die vom Hersteller des Programms in das Geheimfeld, den sog. Tresor, eingegebene Information kennzeichnet den Abnehmer oder Käufer jeder einzelnen autorisierten Programmkopie. Werden von dieser Kopie unerlaubterweise weitere Kopien angefertigt, so kann deren Herkunft ohne weiteres identifiziert werden, indem vor der Dechiffrierung die Grenzen des zu dechiffrierenden Adressgebiets entsprechend geändert werden. Danach erscheint die im Tresor enthaltene Geheiminformation für kurze Zeit bis zur anschliessenden Selbstlöschung in Klarschrift und dient als unwiderlegbarer Nachweis für die Herkunft der unerlaubten Kopie. Der Eingriff in den Dechiffrierprozess verlangt dabei Kenntnisse, über die nur der Hersteller des Programms verfügt.

Mit dem hier vorgeschlagenen Verfahren erfolgt also ein zweifacher Schutz gegen unerwünschten Zugriff zum Klartext des Programms (die Chiffrierung und die Verhinderung der Adressverfolgung während der Dechiffrierung) und es steht eine sichere Identifizierung für die Quelle unerlaubter Kopien zur Verfügung. Die zu schützenden Programme erfahren keinerlei Änderung und werden mit einfachem Aufwand codiert und decodiert.

Ausführungsbeispiele der Erfindung werden nun anhand von Zeichnungen näher erläutert. Es zeigen:

Fig. 1A, Ablaufdiagramme des vorgeschlagenen Verfahrens

Fig. 1B zum Schutz von Programmen gegen unerlaubtes Kopieren;

Fig. 2A das Ablaufprotokoll der Chiffrierung eines Programms, das als .COM-Datei im CP/M-Betriebssystem eines Mikrocomputers des Typs Z80 abgespeichert ist;

Fig. 2B das Ablaufprotokoll der Dechiffrierung des Programms nach Fig. 2A;

Fig. 2C das Ablaufprotokoll der Identifizierung unerlaubter Programmkopien des Programms nach Fig. 2A;

Fig. 3 das Ablaufprotokoll der Chiffrierung eines Programms, das als .REL-Datei im CP/M-Betriebssystem eines Mikrocomputers abgespeichert ist.

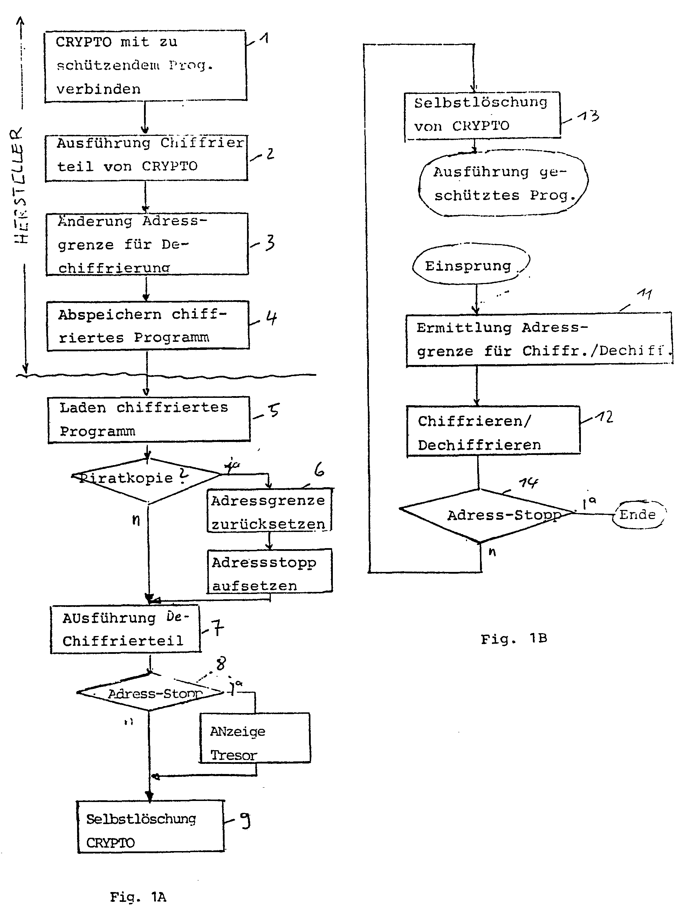

Fig. 1A zeigt in schematischer Weise die einzelnen Schritte, die bei der Chiffrierung und Dechiffrierung eines Programms nach dem hier vorgeschlagenen Verfahren durchlaufen werden. Bei Bezugszeichen 1 wird der Klartext des zu schützenden Programms durch ein Chiffrier-/Dechiffrierprogramm CRYPTO ergänzt, das beispielsweise an das Ende des zu schützenden Programms angehängt wird. Dies kann durch Anbindung der beiden Programmodule aneinander (in einem sog. Binder) geschehen oder indem das Programm CRYPTO am Ende des zu schützenden Programms in den Speicher geladen wird; Einzelheiten dazu werden später erläutert. Anschliessend wird bei Bezugszeichen 2 das Programm CRYPTO aufgerufen und in seinem ersten Teil durchgeführt, der die Chiffrierung erledigt. Der zweite Teil von CRYPTO, der aus Löschroutinen besteht, wird in diesem Verfahrensschritt nicht durchgeführt, sondern durch einen Adressstop auf das Ende des ersten Teils unterdrückt. Die Einzelheiten des Chiffrierprogramms werden später anhand von Fig. 1B näher erläutert. Nach der Chiffrierung des zu schützenden Programms und des Löschteils von CRYPTO werden bei Bezugszeichen 3 die Grenzen des Adressbereichs geändert, der beim Dechiffriervorgang erfasst werden soll. Auf diese Weise wird der sog. Tresor definiert, ein Adressbereich, der geheimzuhaltende Informationen enthält, die zwar chiffriert werden, bei der Dechiffrierung jedoch nicht erscheinen sollen. Der Tresor liegt also am Ende des chiffrierten Bereichs. Mit der Vorverlegung der Dechiffriergrenze im Vergleich zur Chiffrieradresse ist die Chiffrierung des Programms abgeschlossen und es kann bei Bezugszeichen 4 auf einen geeigneten Programmträger, z.B. ein Magnetband oder eine Diskette abgespeichert und vertrieben werden.

Zur Ausführung des so chiffrierten Programms beim Anwender wird das chiffrierte Programm bei Bezugszeichen 5 in den Arbeitsspeicher eines Prozessors geladen und anschliessend sofort der erste Teil des Programms CRYPTO ausgeführt, der die Dechiffrierung besorgt. Die Aktivierung des Dechiffrierteils von CRYPTO erfolgt durch einen Befehl CALL, der dem chiffrierten Programm vorgeschaltet ist und die Dechiffrierroutine als Unterprogramm aufruft. Die Chiffrier-/Dechiffrierroutine von CRYPTO kann aber auch dem eigentlichen Programm insgesamt vorgeschaltet sein, wenn bindefähige, verschiebbare Programm-Module zur Verfügung stehen, die in sog. '.REL-Dateien' gespeichert sind. Die Dechiffrierung erfolgt bei Bezugszeichen 7 innerhalb der oben beschriebenen geänderten Adressgrenzen, so dass der Tresor weiterhin chiffriert bleibt. Nach Abschluss des Dechiffriervorgangs werden die Löschroutinen von CRYPTO angesprungen, die dessen Selbstzerstörung (Bezugszeichen 9) bewirken (mit Einschluss des Tresors). Anschliessend kann das nunmehr im Klartext vorhandene Programm wie üblich ausgeführt werden. Dem Anwender selbst bleibt die Dechiffrierung völlig verborgen, sein Programm läuft in genau der gleichen Weise ab wie ein im Klartext geliefertes Programm mit Ausnahme einer kurzen Zeitverzögerung (in der Grössenordnung einer Sekunde).

Besteht bei einer bestimmten Programmkopie der Verdacht auf eine Raubkopie, so wird bei Bezugszeichen 6 die bei Bezugszeichen 3 durchgeführte Adressänderung des zu dechiffrierenden Bereichs rückgängig gemacht, so dass der gesamte chiffrierte Bereich wieder im Klartext erscheint. Ausserdem wird in diesem Fall am Ende der Dechiffrierroutine ein Adressstop (8) aufgesetzt, der die sonst automatische Selbstzerstörung von CRYPTO und dem Tresor verhindert.

Fig. 1B zeigt ein schematisches Ablaufdiagramm des Programms CRYPTO selbst mit dem schon erwähnten Chiffrier-/Dechiffrierteil 11 und 12 und den Löschroutinen 13. Das Programm CRYPTO beginnt im Block 11 mit der Feststellung der Adressgrenzen des zu chiffrierenden oder zu dechiffrierenden Teils. Die Bestimmung dieser Adressgrenzen ist erforderlich, da CRYPTO für beliebige Programme anwendbar ist und somit an beliebigen Stellen des Adressraums geladen werden kann. Die Adressgrenzen werden jeweils so bestimmt, dass das zu schützende Programm und die Löschroutinen 13 von CRYPTO chiffriert werden. Die Programmteile 11 und 12 von CRYPTO bleiben dagegen unchiffriert. Der Adressstop 14 wird bei der Chiffrierung aktiviert.

Für die Chiffrierung selbst können die im Stand der Technik bekannten Verfahren und Algorithmen verwendet werden. Ein Beispiel für eine derartige Codierung, die als wechselnden Codierschlüssel die Speicheradresse des jeweils zu chiffrierenden Speicherwortes verwendet, ist in dem Programm enthalten, das im Anhang wiedergegeben ist und aus Befehlen besteht, die der Maschinensprache des bekannten Mikroprozessors Z80 entsprechen. Die Codierung und die Decodierung werden dort gleichermassen durch Exklusiv-Oder-Verknüpfungen (XOR) durchgeführt (Programmzeilen 80 bis 82). Ausserdem erfolgt in Programmzeile 83 eine weitere XOR-Verknüpfung des jeweiligen Speicherworts mit einem Festwert (8 Bits), so dass der Hersteller 255 verschiedene Chiffriermöglichkeiten zur Auswahl hat.

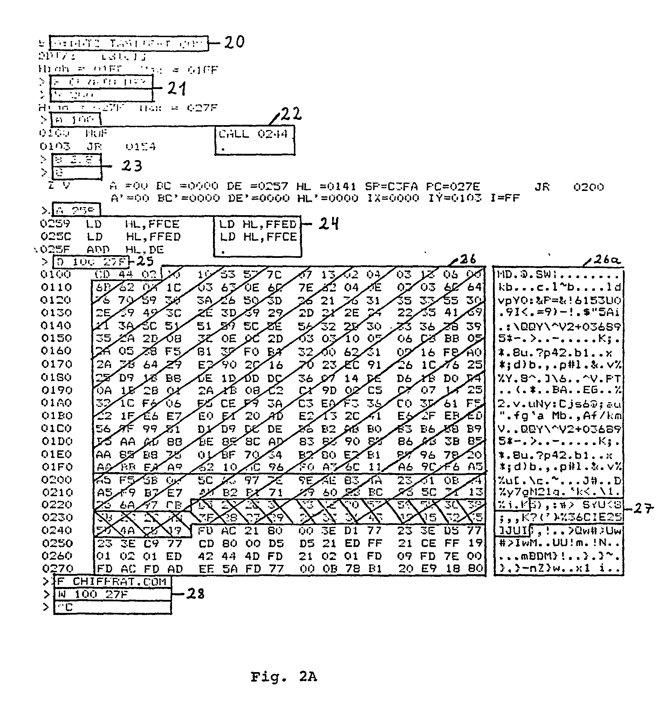

Fig. 2A zeigt ein Ablaufprotokoll für die Chiffrierung eines Programms mit dem Z80 Chiffrierprogramm des Anhangs, wenn das zu schützende Programm als sogenannte .COM-Datei innerhalb des Betriebssystems CP/M vorliegt. Derartige Dateien enthalten Programme in Maschinencode, die unter ihrem Namen durch Kommandos des Betriebssystems aufgerufen und dann ausgeführt werden können. Diese Dateien werden immer auf eine feste Adresse des Arbeitsspeichers geladen, z.B. die Adresse 100 (in Hexadezimaldarstellung). Zur Untersuchung des Programmablaufs während der Chiffrierung, Dechiffrierung und zur Ausführung können diese Programme durch ein besonderes Programm des Betriebssystems geladen werden, das die Bezeichnung DDTZ (Dynamic Debug Tool for Z80) trägt. Mit diesem Hilfsprogramm können verschiedene Funktionen aufgerufen werden, beispielsweise die Änderung von Speicherworten oder die Anzeige von Arbeitsspeicherbereichen. Entsprechend der Darstellung in Fig. 1A wird in Fig. 2A bei Bezugszeichen 20 das zu chiffrierende Programm mit dem Namen TASTTEST.COM in den Arbeitsspeicher geladen. Ein hexadezimaler Auszug des Arbeitsspeichers von der Adresse 100 bis zur Adresse 27F ist in dem Block mit Bezugszeichen 26 wiedergegeben. Die durch die Hexadezimalcodes im Block 26 dargestellten Zeichen sind in Block 26a gezeigt. Aufgrund der Chiffrierung ergibt sich in Block 26a kein lesbarer Text. Bei Bezugszeichen 21 wird durch einen Befehl F (= File) des Hilfsprogramms DDTZ das Chiffrierprogramm mit dem Namen CRYPTO.HEX ab Adresse 200 an das Programm TASTTEST angehängt, so dass insgesamt die Speicherplätze 100 bis 27F (hexadezimal) des Speichers mit beiden Programmen belegt sind. Auf Adresse 100 wird bei Bezugszeichen 22 ein Sprungbefehl (CALL) zum Chiffrier-/Dechiffrierteil des Programms CRYPTO eingefügt, der auf der Adresse 244 beginnt. Anschliessend wird bei Bezugszeichen 23 am Ende des Chiffrier-/Dechiffrierteils von CRYPTO (bei Adresse 27E) ein Adressstop vorprogrammiert (mit dem DDTZ-Befehl B=Breakpoint), so dass die Ausführung der Löschroutinen von CRYPTO (die in diesem Beispiel bei der Hexadezimaladresse 200 beginnen und sich bis 223 erstrecken) unterdrückt wird. Mit dem DDTZ-Befehl G (= GO) wird anschliessend die Chiffrierung durchgeführt und zwar von der Speicheradresse 103 bis zur Speicheradresse 243 (schraffiert dargestellt). Der Chiffrier-/Dechiffrierteil von CRYPTO beginnend auf der Adresse 244 wird nicht chiffriert. Nach Abschluss der Chiffrierung werden bei Bezugszeichen 24 die Ladebefehle für die Register HL abgeändert; die Register HL bestimmen, bis zu welcher Adresse eine Chiffrierung bzw. Dechiffrierung erfolgen soll. Um einen Bereich von Arbeitsspeicheradressen zu definieren, der bei der nachfolgenden Dechiffrierung nicht mehr verändert wird und somit einen Tresor 27 bildet, wird die Adressgrenze, bis zu der eine Dechiffrierung erfolgen soll, kürzer gewählt als die Adressgrenze, bis zu der die Chiffrierung durchgeführt wurde. Die Länge dieses Tresors ist durch entsprechende Definition im Programm CRYPTO frei wählbar. Im vorliegenden Beispiel erstreckt sich der Tresor von hexadezimal 224 bis 243.

Nach der Änderung der Adressgrenzen wird bei Bezugszeichen 28 der chiffrierte Code als Datei CHIFFRAT.COM abgespeichert und steht zum Vertrieb zur Verfügung. Der jeweilige Programmname ist dabei frei wählbar.

Das Ergebnis der oben beschriebenen Schritte bei der Chiffrierung lässt sich mit dem DDTZ-Befehl D (= Display; Bezugszeichen 25) darstellen, der einen Speicherauszug erstellt. Der Speicherbereich von der Adresse 103 bis 243 ist chiffriert und schraffiert dargestellt. Der durch die Adressänderung definierte Tresor 27 ist doppelt schraffiert gekennzeichnet.

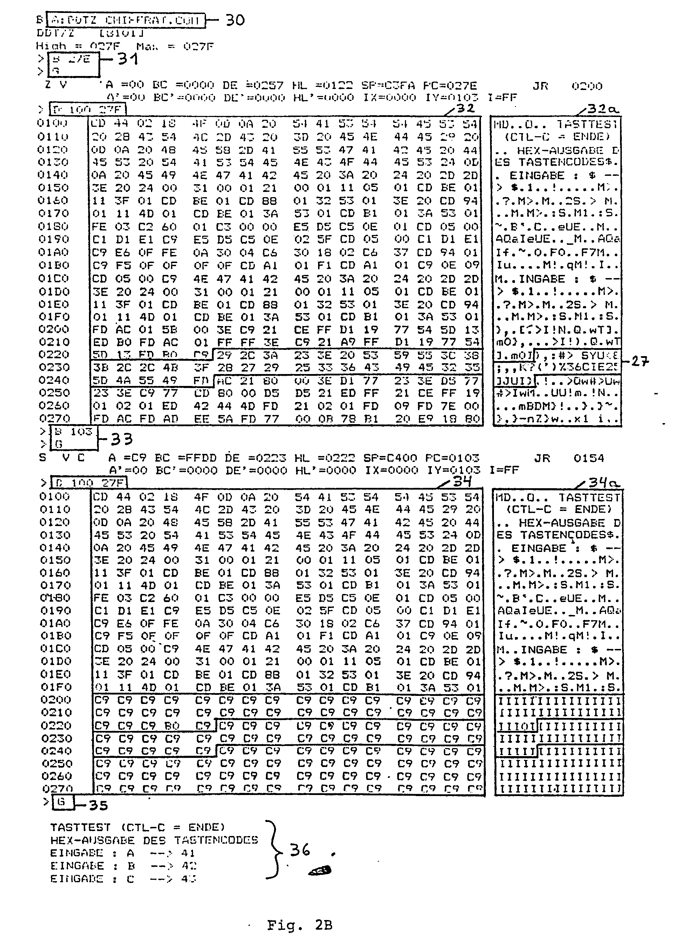

Fig. 2B zeigt die Schritte, die bei der Dechiffrierung und bei der Ausführung eines Programms durchlaufen werden, das in chiffrierter Form an einen Anwender geliefert wurde. Die Speicherinhalte nach dem Dechiffrieren und nach dem Löschen des Programms CRYPTO sind wieder durch entsprechende Adressstops sichtbar gemacht, die mit dem Programm DDTZ aufgesetzt werden können, sofern die entsprechenden Endadressen bekannt sind. Dies ist beim Anwender nicht der Fall, so dass dort die Dechiffrierung und die Löschung von CRYPTO automatisch durchgeführt wird.

Wenn bei bekannter Endadresse nach dem Laden (Bezugszeichen 30) des chiffrierten Programms CHIFFRAT.COM bei Bezugszeichen 31 mit dem Befehl B 27E ein Adressstop am Ende des Chiffrier-/Dechiffrierteils von CRYPTO aufgesetzt wird, zeigt der Auszug des Arbeitsspeichers 32 zu diesem Zeitpunkt das dechiffrierte, ablauffähige Programm TAST-TEST und die dechiffrierten beiden Teile von CRYPTO sowie den immer noch nicht dechiffrierten Tresor innerhalb des Programms CRYPTO. Selbst wenn es einem Anwender also bekannt wäre, an welcher Adresse der erste Teil von CRYPTO endet, wäre ein Zugriff zum Tresor immer noch gesperrt. Den Zustand des Arbeitsspeichers nach der Ausführung des zweiten Teils von CRYPTO mit den Löschroutinen (Eingabe eines Adressstops auf Adresse 103 bei Bezugszeichen 33) zeigt der Speicherauszug 34, in dem alle Teile von CRYPTO mit Einschluss des Tresors überschrieben wurden, und zwar durch den Operationscode C9 des Mikroprozessors Z80, der dem Return-Befehl entspricht. Dadurch werden alle Sprünge in den gelöschten Teil automatisch zum Absprung zurückgeführt. Störungen des auszuführenden Programms sind also selbst dann ausgeschlossen, wenn das geschützte Programm durch eigene Fehler in den gelöschten Bereich gelangt. Nach dem Starten des dechiffrierten Programms TASTTEST (mit dem Befehl G bei Bezugszeichen 35) erfolgt die ungestörte Programmausführung, bei der die Codes der jeweils gedrückten Eingabetaste ausgegeben werden (Bezugszeichen 36).

Fig. 2C zeigt in einem Auflaufprotokoll die Schritte, die durchgeführt werden müssen, um das nach Fig. 2A chiffrierte Programm vollständig zu dechiffrieren und so die Herkunft unerlaubt hergestellter Kopien festzustellen. Dazu wird bei Bezugszeichen 41 wiederum das chiffrierte Programm CHIFFRAT.COM in den Arbeitsspeicher geladen. Bei Bezugszeichen 42 werden mit dem Befehl L (= List) die Maschinenbefehle inspiziert, die auf den Adressen 259 und 25C gespeichert sind; es handelt sich dabei um die beiden Ladebefehle für die Register HL, in denen die Adressgrenzen für die Dechiffrierung enthalten sind. Der erste Ladebefehl LD lädt das Register HL mit der weiteren Adressgrenze, der zweite Ladebefehl überschreibt dann diesen ersten Wert mit einer kürzeren Grenze (bei der Chiffrierung wurde wie oben beschrieben gerade umgekehrt verfahren). Mit dem DDTZ-Befehl S (= Substitute) werden bei Bezugszeichen 43 die verkürzten Adresslängen aufgehoben und so die volle Dechiffrierung von CRYPTO mit Einschluss des Tresors vorbereitet. Dazu wird der zweite Ladebefehl einfach mit hexadezimalen Nullen überschrieben, die dem 'NOP'-Befehl entsprechen, der keine Operation ausführt. Die für die Ausführung der Befehle L und S erforderlichen Adressen sind nur dem Hersteller des chiffrierten Programms bekannt; sie ändern sich entsprechend der Länge des jeweils chiffrierten Programms.

Bei Bezugszeichen 44 wird wiederum ein Adressstop auf das Ende des Chiffrier-/Dechiffrierteils von CRYPTO gesetzt (bei Adresse 27E, Bezugszeichen 44) und der Dechiffriervorgang gestartet. Nach dem Adressstop wird mit dem DDTZ-Befehl D bei Bezugszeichen 45 der Speicherinhalt von Adresse 100 bis 27F angezeigt, so dass der jetzt dechiffrierte Inhalt des Tresors 27 sichtbar wird. Zur Dechiffrierung des Tresors muss also sowohl bekannt sein, an welchen Adressen des Programms CRYPTO die Dechiffriergrenzen enthalten sind, als auch wo der Adressstop nach dem Ende der Dechiffrierung anzubringen ist; wird die Adressgrenze zu gross gewählt, zerstört die Dechiffrierlogik sich selbst; ist sie zu klein, so wird der Tresor nicht oder nicht voll entschlüsselt. Da beide Informationen einem unerlaubt Kopierenden nicht bekannt sind, besteht für ihn auch keine Möglichkeit, die im Tresor enthaltenen Identifizierungen zu beseitigen.

Nach der Sichtbarmachung des Tresors wird der Löschteil von CRYPTO ausgeführt und nach einem Adressstop 46 bei 103 der Speicherinhalt angezeigt, in dem der dechiffrierte Tresor ebenfalls mit Return-Codes überschrieben ist. Anschliessend wird das Programm TASTTEST wie oben beschrieben ausgeführt.

Ein weiterer Schutz des Tresors ist durch dessen Selbstzerstörung bei befugter Durchführung des Programms durch die Löschroutinen von Crypto zu sehen. Da ausserdem, wie schon erwähnt, die Ablaufverfolgung des Programms (der sog. Programmtrace) durch Verwendung von Maschinenbefehlen verhindert wird, die dem Assembler und dem Hilfsprogramm DDTZ nicht bekannt sind, besteht für Unbefugte keine Möglichkeit, das Programm im Klartext kennenzulernen.

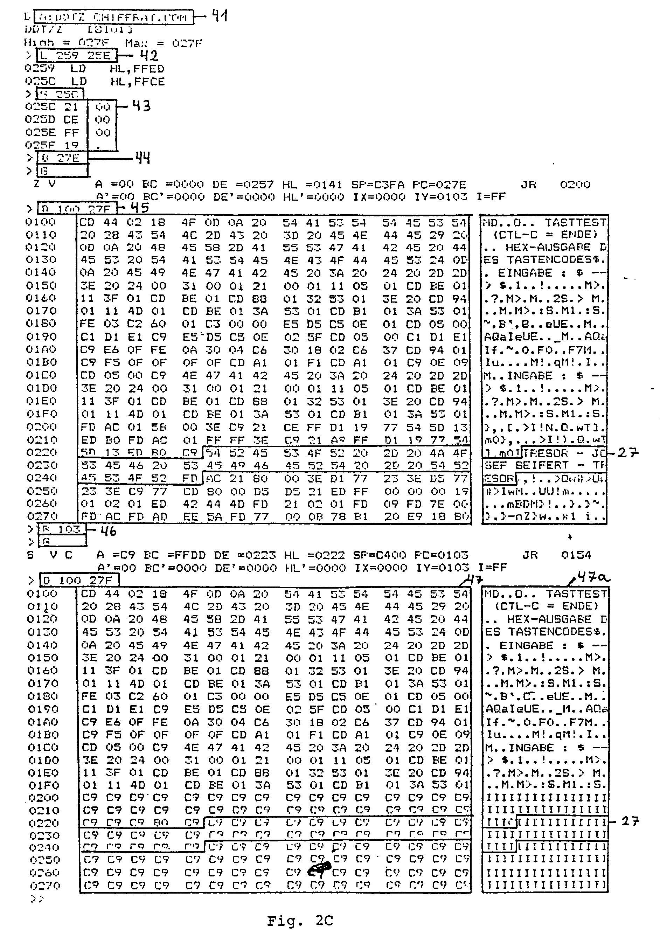

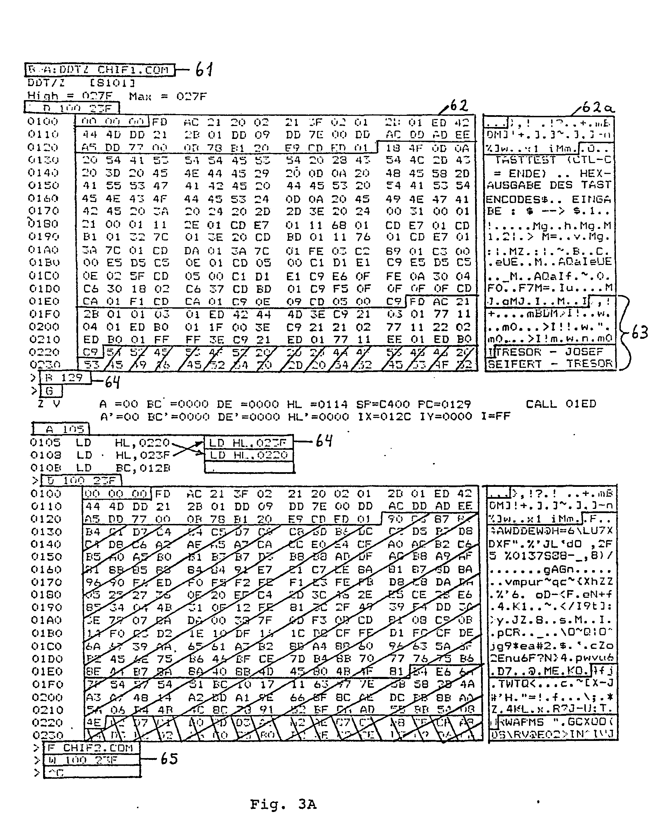

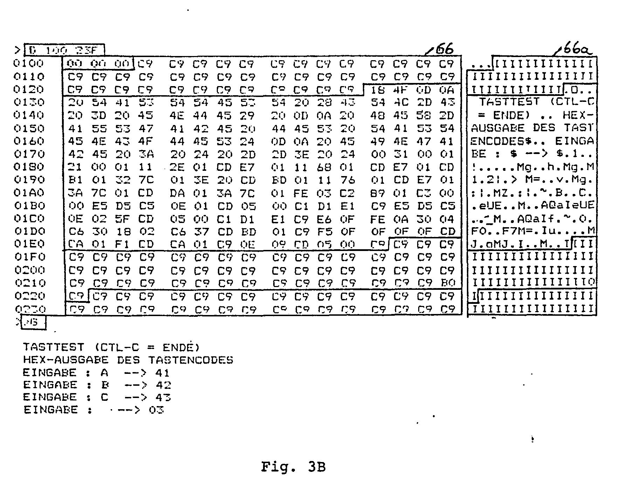

Fig. 3 zeigt eine zweite Möglichkeit, wie die beiden Teile des Programms CRYPTO an ein zu schützendes Programm angefügt werden können. In diesem Fall sind die zu schützenden Programme in sogenannten .REL-Dateien abgelegt, die ebenfalls vom Betriebssystem CP/M in den Arbeitsspeicher geladen werden können. Im Gegensatz zu den .COM-Dateien sind .REL-Dateien aber nicht an feste Ladeadressen gebunden, sondern können überall im Arbeitsspeicher eingesetzt werden. Bei derartigen Dateien wird der Chiffrier-/Dechiffrierteil des Programms CRYPTO als Vorspann 62 und sein Löschteil zusammen mit dem Tresor (schraffiert) als Nachspann 63 angefügt. Alle drei Programmteile werden wie üblich durch einen sogenannten Binder miteinander verbunden und in den Arbeitsspeicher geladen (Bezugszeichen 61). Wieder wird, wie im Beispiel von Fig. 2A, beim Hersteller ein Adressstop am Ende des Chiffrierteils aufgesetzt (hier bei Adresse 129 Bezugszeichen 63) und anschliessend bei Bezugszeichen 64 die Dechiffrierlänge um die Länge des Tresors verkürzt (also statt bis zum Chiffrierende bei 23F nur bis zum Beginn des Tresors bei 220). Anschliessend wird das chiffrierte Programm abgespeichert (Bezugszeichen 65) und kann analog zum Vorgehen nach Fig. 2B und 2C behandelt werden. Bezugszeichen 66 und 66a zeigen den Arbeitsspeicherinhalt nach der Selbstlöschung des zweiteiligen Schutzprogramms. Die Ausführung des Anwendungsprogramms (hier wieder TASTTEST) erfolgt dann ungestört.

Für die beiden Versionen des Schutzprogramms CRYPTO, die als Hexadezimaldarstellung in Fig. 2 und 3 wiedergegeben sind, zeigen Anlage 1 bzw. Anlage 2 die ausführlichen Assembler-Listen; die Chiffrier-/Dechiffrierteile und die Löschteile sind durch entsprechende Kommentierung hervorgehoben. Die genaue Beschreibung der aufgeführten Assembler-Befehle ist z.B. in dem Benutzerhandbuch für die Z80 Assemblersprache enthalten, das von der Firma Zilog herausgegeben wird. Das Chiffrieren und das Dechiffrieren erfolgt mit denselben Instruktionen (Programmzeilen 79 bis 83 in Anhang 1 und Programmzeilen 24 bis 28 in Anhang 2) durch Exklusiv-Oder-Verknüpfung eines zu chiffrierenden/dechiffrierenden Speicherworts mit seiner Eigenadresse und einem Festwert (hier 5A).

Die Programmzeilen 79, 80 und 81, 82 (Anhang 1) sowie 24, 25 und 26, 27 (Anhang 2) z.B. stellen jeweils zusammen eine XOR-Maschineninstruktion des Mikroprozessors dar, die dem Assembler nicht bekannt ist und die er nicht verarbeiten kann; der erste Teil dieses «unbekannten» Operationscodes (z.B. DDAC) wurde deshalb als Konstante im Assemblerprogramm definiert (mit DB). Eine entsprechende Technik ist auch in den Programmzeilen 19 und 33 von Anhang 1 bzw. 14 des Kopfteils CRYRKOPF und 17 des Fussteils CRYRFUSS von Anhang 2 angewandt. Da diese Operationscodes auch dem Dienstprogramm unbekannt sind, können diese nicht zur Programmablaufverfolgung (TRACE) bei der Chiffrierung/Dechiffrierung eingesetzt werden, die sonst möglicherweise zur Aufdeckung des Chiffrierverfahrens führen könnte.

In ähnlicher Weise versagen sog. Disassembler bei der Aufgabe, aus der Hexadezimaldarstellung des Speicherinhalts wieder eine leicht lesbare Assemblerliste herzustellen; die «unbekannten» Operationscodes werden nicht angezeigt.

**Patentansprüche**

1. Verfahren zum Schutz von auf maschinenlesbaren Datenträgern aufgezeichneten Programmen vor unerlaubter Einsichtnahme und unerlaubtem Kopieren, bei dem eine Chiffrierung durchgeführt wird, gekennzeichnet durch die folgenden Verfahrensschritte:
— das zu schützende Programm wird mit einem aus einem Chiffrier-/Dechiffrier- und einem Löschteil bestehenden Schutzprogramm verbunden;
— das zu schützende Programm und der Löschteil des Schutzprogramms werden chiffriert;
— nach dem Chiffrieren wird im Chiffrier-/Dechiffrierteil des Schutzprogramms die Länge des zu dechiffrierenden Bereichs soweit verkürzt, dass für den jeweiligen Anwender spezifische Informationen chiffriert bleiben;
— vor der Ausführung des Programms wird der Chiffrier-/Dechiffrierteil des Schutzprogramms zur Dechiffrierung ausgeführt.

2. Verfahren nach Anspruch 1, dadurch gekennzeichnet, dass nach dem Dechiffrieren der Chiffrier-/Dechiffrierteil und der Löschteil des Schutzprogramms gelöscht werden.

3. Verfahren nach Anspruch 2, dadurch gekennzeichnet, dass die zu löschenden Speicherbereiche mit Operationscodes abschliessen, die zum aufrufenden Programm zurückführen.

4. Verfahren nach einem der Ansprüche 1 bis 3, dadurch gekennzeichnet, dass die Chiffrierung und Dechiffrierung durch Exklusiv-Oder-Verknüpfung (XOR) der gespeicherten Information mit der Adresse der Speicherstelle erfolgt.

5. Verfahren nach einem der Ansprüche 1 bis 3, dadurch gekennzeichnet, dass die Chiffrierung und Dechiffrierung durch Exklusiv-Oder-Verknüpfung (XOR) der gespeicherten Information mit einem frei wählbaren binären Festwert erfolgt.

6. Verfahren nach einem der Ansprüche 1 bis 5, dadurch gekennzeichnet, dass das Schutzprogramm so an das zu schützende Programm angefügt wird, dass zuerst der Löschteil des Schutzprogramms und anschliessend der Chiffrier/Dechiffrierteil folgt.

7. Verfahren nach einem der Ansprüche 1 bis 5, dadurch gekennzeichnet, dass der Chiffrier-/Dechiffrierteil des Schutzprogramms vor dem Beginn eines zu schützenden verschiebbaren Programms angefügt wird und der Löschteil an dessen Ende.

8. Verfahren nach einem der Ansprüche 1 bis 7, dadurch gekennzeichnet, dass beim Chiffrieren ein Adressstop auf das Ende des Chiffrier-/Dechiffrierteils des Schutzprogramms aufgesetzt wird.

9. Verfahren nach einem der Ansprüche 1 bis 8, dadurch gekennzeichnet, dass der Chiffrier-/Dechiffrierteil des Schutzprogramms Maschinenbefehle enthält, die weder vom Assemblerprogramm noch von den Dienstprogrammen (z.B. Disassembler oder Debugger), sondern nur vom benutzten Prozessor (z.B. Z80) verarbeitet werden können.

**Revendications**

1. Procédé de protection de programmes, enregistrés sur des supports d'information lisibles sur machine, à l'égard d'une prise de connaissance non autorisée et d'un copiage non autorisé, dans lequel on exécute un chiffrage, caractérisé par les étapes suivantes du procédé:

— on lie le programme à protéger à un programme de protection constitué d'une partie de chiffrage/déchiffrage et d'une partie à effacer;
— on chiffre le programme à protéger ainsi que la partie à effacer du programme de protection;
— après le chiffrage, dans la partie de chiffrage/déchiffrage du programme de protection, on raccourcit la longueur de la zone à déchiffrer de façon que les informations spécifiques restent chifrées pour l'utilisateur respectif;
— avant l'exécution du programme, se produit l'exécution de la partie de chiffrage/déchiffrage du programme de protection qui déchiffre le programme.

2. Procédé selon la revendication 1, caractérisé en ce qu'après le déchiffrage on efface la partie de chiffrage/déchiffrage ainsi que la partie à effacer du programme de protection.

3. Procédé selon la revendication 2, caractérisé en ce que les zones de mémoire à effacer se terminent par des codes d'opération qui renvoient au programme d'appel.

4. Procédé selon l'une des revendications 1 à 3, caractérisé en ce que le chiffrage et le déchiffrage se font par liaison logique OU exclusif (XOR) de l'information mémorisée avec l'adresse de la position en mémoire.

5. Procédé selon l'une des revendications 1 à 3, caractérisé en ce que le chiffrage et le déchiffrage se font par liaison logique OU exclusif (XOR) de l'information mémorisée avec une constante binaire que l'on peut choisir librement.

6. Procédé selon l'une des revendications 1 à 5, caractérisé en ce que l'on lie le programme de protection au programme à protéger de façon telle que c'est d'abord la partie à effacer du programme de protection, puis la partie de chiffrage/déchiffrage qui suivent le programme à protéger.

7. Procédé selon l'une des revendications 1 à 5, caractérisé en ce que l'on lie la partie de chiffrage/déchiffrage du programme de protection avant le début d'un programme translatable à protéger; et en ce que l'on en lie la partie à effacer à la fin de ce programme à protéger.

8. Procédé selon l'une des revendications 1 à 7, caractérisé en ce qu'au cours du chiffrage on place un point d'arrêt à la fin de la partie de chiffrage/déchiffrage du programme de protection.

9. Procédé selon l'une des revendications 1 à 8, caractérisé en ce que la partie de chiffrage/déchiffrage du programme de protection contient des instructions machine qui ne peuvent être traitées ni par le programme assembleur, ni par les utilitaires (par exemple le désassembleur ou l'utilitaire de mise au point), mais uniquement par le processeur utilisé (par exemple Z80).

## Claims

1. Method for protecting programs recorded on machine-readable data carriers from unauthorized inspection and unauthorized copying, in which method enciphering is performed, characterized by the following steps:

    — the program to be protected is combined with a protection program consisting of an encipher/decipher part and an erase part;

    — the program to be protected and the encipher part of the protection program are enciphered;

    — after enciphering, the length of the area to be deciphered is shortened in the encipher/decipher part of the protection program to such an extent that information specific for the corresponding user remains enciphered;

    — before execution of the program the encipher/decipher part of the protection program is executed for deciphering.

2. Method in accordance with claim 1, characterized in that the encipher/decipher part and the erase part of the protection program are erased after deciphering.

3. Method in accordance with claim 2, characterized in that the storage areas to be erased terminate with operation codes that return to the calling program.

4. Method in accordance with one of the claims 1 to 3, characterized in that enciphering and deciphering is performed by exclusive OR-ing the stored information with the address of the storage location.

5. Method in accordance with one of the claims 1 to 3, characterized in that enciphering and deciphering is performed by exclusive OR-ing the stored information with a freely selectable binary constant.

6. Method in accordance with one of the claims 1 to 5, characterized in that the protection program is added to the program to be protected such that the erase part of the protection program follows first and then the encipher/decipher part.

7. Method in accordance with one of the claims 1 to 5, characterized in that the encipher/decipher part of the protection program is added in front of the program to be protected and the erase part at its end.

8. Method in accordance with one of the claims 1 to 7, characterized in that an address stop to the end of the encipher/decipher part of the protection program is introduced upon enciphering.

9. Method in accordance with one of the claims 1 to 8, characterized in that the encipher/decipher part of the protection program contains machine instructions which cannot be executed by either the assembler program or the utility programs (e.g. disassembler or debugger), but only by the processor used (e.g. Z80).

Fig. 1A

**HERSTELLER**

1. CRYPTO mit zu schützendem Prog. verbinden
2. Ausführung Chiffrier teil von CRYPTO
3. Änderung Adress- grenze für De- chiffrierung
4. Abspeichern chiff- riertes Programm
5. Laden chiffriertes Programm
- Piratkopie ?
6. Adressgrenze zurücksetzen / Adressstopp aufsetzen
7. AUsführung De- Chiffrierteil
8. Adress-Stopp
- ANzeige Tresor
9. Selbstlöschung CRYPTO

Fig. 1B

13. Selbstlöschung von CRYPTO
- Ausführung ge- schütztes Prog.
- Einsprung
11. Ermittlung Adress- grenze für Chiffr./Dechiff.
12. Chiffrieren/ Dechiffrieren
14. Adress-Stopp — Ende

```
≡ REMOTE TRANSPORT COM         — 20
2017:   CALL:
High = 01FC  ... = 01FF
> A CC 2670 JUS              — 21
> XX 1970
High = 027F  low = 027F
> A 100                        22
0100   RUF           ┌──────────────┐/
0103   JR    0154    │ CALL 0244    │
> B 2.5             — 23  └──────────────┘
> B
Z V      A =00 BC =0000 DE =0257 HL =0141 SP=C3FA PC=027E        JR   0200
         A'=00 BC'=0000 DE'=0000 HL'=0000 IX=0000 IY=0103 I=FF
>.A 25E
0259   LD    HL,FFCE    ┌──────────────┐
025C   LD    HL,FFED    │ LD HL,FFED   │— 24
\025F  ADD   HL,DE      │ LD HL,FFCE   │
> D 100 27F — 25        └──────────────┘
```

Fig. 2A

3/6

```
B │A:PUTZ CHI-FRAT.CGM│─ 30
DDT/Z  [B101]
High = 027F  Max = 027F
>│B 27E│─ 31
>│G│
 Z V    ·A =00  BC =0000  DE =0257  HL =0122  SP=C3FA  PC=027E        JR    0200
         A'=00  BC'=0000  DE'=0000  HL'=0000  IX=0000  IY=0103  I=FF
>│D 100 27F│                                              /32            /32a
0100  CD 44 02 18   4F 0D 0A 20   54 41 53 54   54 45 53 54   │MD..Q.. TASTTEST│
0110  20 2B 43 54   4C 2D 43 20   3D 20 45 4E   44 45 29 20   │(CTL-C = ENDE)  │
0120  0D 0A 20 48   45 58 2D 41   55 53 47 41   42 45 20 44   │.. HEX-AUSGABE D│
0130  45 53 20 54   41 53 54 45   4E 43 4F 44   45 53 24 0D   │ES TASTENCODES$.│
0140  0A 20 45 49   4E 47 41 42   45 20 3A 20   24 20 2D 2D   │. EINGABE : $ --│
0150  3E 20 24 00   31 00 01 21   00 01 11 05   01 CD BE 01   │> $.1..!.....M>.│
0160  11 3F 01 CD   BE 01 CD 88   01 32 53 01   3E 20 CD 94   │.?.M>.M..2S.> M.│
0170  01 11 4D 01   CD BE 01 3A   53 01 CD B1   01 3A 53 01   │..M.M>.:S.M1.:S.│
0180  FE 03 C2 60   01 C3 00 00   E5 D5 C5 0E   01 CD 05 00   │~.B`.C..eUE..M..│
0190  C1 D1 E1 C9   E5 D5 C5 0E   02 5F CD 05   00 C1 D1 E1   │AQaIeUE.._M..AQa│
01A0  C9 E6 0F FE   0A 30 04 C6   30 18 02 C6   37 CD 94 01   │If.~.0.F0..F7M..│
01B0  C9 F5 0F 0F   0F 0F CD A1   01 F1 CD A1   01 C9 0E 09   │Iu....M!.qM!.I..│
01C0  CD 05 00 C9   4E 47 41 42   45 20 3A 20   24 20 2D 2D   │M..INGABE : $ --│
01D0  3E 20 24 00   31 00 01 21   00 01 11 05   01 CD BE 01   │> $.1..!.....M>.│
01E0  11 3F 01 CD   BE 01 CD 88   01 32 53 01   3E 20 CD 94   │.?.M>.M..2S.> M.│
01F0  01 11 4D 01   CD BE 01 3A   53 01 CD B1   01 3A 53 01   │..M.M>.:S.M1.:S.│
0200  FD AC 01 5B   00 3E C9 21   CE FF D1 19   77 54 5D 13   │},.[`>I!N.Q.wT].│
0210  ED B0 FD AC   01 FF FF 3E   C9 21 A9 FF   D1 19 77 54   │mO},...>I!).Q.wT│
0220  5D 13 FD B0   C9 29 2C 3A   23 3E 20 53   59 55 3C 36   │].mOI),;#> SYU<6│─ 27
0230  3B 2C 2C 4B   3F 28 27 29   25 33 36 43   49 45 32 35   │;,.K?(')%36CIE25│
0240  5D 4A 55 49   FD AC 21 80   00 3E D1 77   23 3E D5 77   │]JUIJ.!..>Qw#>Uw│
0250  23 3E C9 77   CD 80 00 D5   D5 21 ED FF   21 CE FF 19   │#>Iw#..UU!m.!N..│
0260  01 02 01 ED   42 44 4D FD   21 02 01 FD   09 FD 7E 00   │...mBDM)!..}.}~.│
0270  FD AC FD AD   EE 5A FD 77   00 0B 78 B1   20 E9 19 B0   │}.}-nZ}w..x1 i..│
>│B 103│─ 33
>│G│
 S   V C   A =C9  BC =FFDD  DE =0223  HL =0222  SP=C400  PC=0103        JR    0154
         A'=00  BC'=0000  DE'=0000  HL'=0000  IX=0000  IY=0103  I=FF
>│D 100 27F│                                              /34            /34a
0100  CD 44 02 18   4F 0D 0A 20   54 41 53 54   54 45 53 54   │MD..Q.. TASTTEST│
0110  20 2B 43 54   4C 2D 43 20   3D 20 45 4E   44 45 29 20   │(CTL-C = ENDE)  │
0120  0D 0A 20 48   45 58 2D 41   55 53 47 41   42 45 20 44   │.. HEX-AUSGABE D│
0130  45 53 20 54   41 53 54 45   4E 43 4F 44   45 53 24 0D   │ES TASTENCODES$.│
0140  0A 20 45 49   4E 47 41 42   45 20 3A 20   24 20 2D 2D   │. EINGABE : $ --│
0150  3E 20 24 00   31 00 01 21   00 01 11 05   01 CD BE 01   │> $.1..!.....M>.│
0160  11 3F 01 CD   BE 01 CD 88   01 32 53 01   3E 20 CD 94   │.?.M>.M..2S.> M.│
0170  01 11 4D 01   CD BE 01 3A   53 01 CD B1   01 3A 53 01   │..M.M>.:S.M1.:S.│
0180  FE 03 C2 60   01 C3 00 00   E5 D5 C5 0E   01 CD 05 00   │~.B`.C..eUE..M..│
0190  C1 D1 E1 C9   E5 D5 C5 0E   02 5F CD 05   00 C1 D1 E1   │AQaIeUE.._M..AQa│
01A0  C9 E6 0F FE   0A 30 04 C6   30 18 02 C6   37 CD 94 01   │If.~.0.F0..F7M..│
01B0  C9 F5 0F 0F   0F 0F CD A1   01 F1 CD A1   01 C9 0E 09   │Iu....M!.qM!.I..│
01C0  CD 05 00 C9   4E 47 41 42   45 20 3A 20   24 20 2D 2D   │M..INGABE : $ --│
01D0  3E 20 24 00   31 00 01 21   00 01 11 05   01 CD BE 01   │> $.1..!.....M>.│
01E0  11 3F 01 CD   BE 01 CD 88   01 32 53 01   3E 20 CD 94   │.?.M>.M..2S.> M.│
01F0  01 11 4D 01   CD BE 01 3A   53 01 CD B1   01 3A 53 01   │..M.M>.:S.M1.:S.│
0200  C9 C9 C9 C9   C9 C9 C9 C9   C9 C9 C9 C9   C9 C9 C9 C9   │IIIIIIIIIIIIIIII│
0210  C9 C9 C9 C9   C9 C9 C9 C9   C9 C9 C9 C9   C9 C9 C9 C9   │IIIIIIIIIIIIIIII│
0220  C9 C9 C9 B0   C9 C9 C9 C9   C9 C9 C9 C9   C9 C9 C9 C9   │III0IIIIIIIIIIII│
0230  C9 C9 C9 C9   C9 C9 C9 C9   C9 C9 C9 C9   C9 C9 C9 C9   │IIIIIIIIIIIIIIII│
0240  C9 C9 C9 C9   C9 C9 C9 C9   C9 C9 C9 C9   C9 C9 C9 C9   │IIIIIIIIIIIIIIII│
0250  C9 C9 C9 C9   C9 C9 C9 C9   C9 C9 C9 C9   C9 C9 C9 C9   │IIIIIIIIIIIIIIII│
0260  C9 C9 C9 C9   C9 C9 C9 C9   C9 C9 C9 C9 · C9 C9 C9 C9   │IIIIIIIIIIIIIIII│
0270  C9 C9 C9 C9   C9 C9 C9 C9   C9 C9 C9 C9   C9 C9 C9 C9   │IIIIIIIIIIIIIIII│
>│G│─ 35
```

```
TASTTEST (CTL-C = ENDE)
HEX-AUSGABE DES TASTENCODES  }
EINGABE : A  --> 41            } 36  .
EINGABE : B  --> 42            }
EINGABE : C  --> 43
```

Fig. 2B

```
D[A:DDTZ CHIFFRAT.COM]— 41
DDT/Z    [S1GT]
High = 027F   Max = 027F
>[L 259 25E]— 42
0259 LD    HL,FFED
025C LD    HL,FFCE
>[S 25C]
025C 21   00 — 43
025D CE   00
025E FF   00
025F 19   .
>[D 27E]— 44
>[G]
  Z V        A =00 BC =0000 DE =0257 HL =0141 SP=C3FA PC=027E        JR   0200
             A'=00 BC'=0000 DE'=0000 HL'=0000 IX=0000 IY=0103 I=FF
>[D 100 27F]— 45
0100  CD 44 02 18   4F 0D 0A 20   54 41 53 54   54 45 53 54   MD..O.. TASTTEST
0110  20 28 43 54   4C 2D 43 20   3D 20 45 4E   44 45 29 20   (CTL-C = ENDE)
0120  0D 0A 20 48   45 58 2D 41   55 53 47 41   42 45 20 44   .. HEX-AUSGABE D
0130  45 53 20 54   41 53 54 45   4E 43 4F 44   45 53 24 0D   ES TASTENCODES$.
0140  0A 20 45 49   4E 47 41 42   45 20 3A 20   24 20 2D 2D   . EINGABE : $ --
0150  3E 20 24 00   31 00 01 21   00 01 11 05   01 CD BE 01   > $.1..!.....M>.
0160  11 3F 01 CD   BE 01 CD 88   01 32 53 01   3E 20 CD 94   .?.M>.M..2S.> M.
0170  01 11 4D 01   CD BE 01 3A   53 01 CD B1   01 3A 53 01   ..M.M>.:S.M1.:S.
0180  FE 03 C2 60   01 C3 00 00   E5 D5 C5 0E   01 CD 05 00   ~.B`.B..eUE..M..
0190  C1 D1 E1 C9   E5 D5 C5 0E   02 5F CD 05   00 C1 D1 E1   AQaIeUE.._M..AQa
01A0  C9 E6 0F FE   0A 30 04 C6   30 18 02 C6   37 CD 94 01   If.~.0.F0..F7M..
01B0  C9 F5 0F 0F   0F 0F CD A1   01 F1 CD A1   01 C9 0E 09   Iu....M!.qM!.I..
01C0  CD 05 00 C9   4E 47 41 42   45 20 3A 20   24 20 2D 2D   M..INGABE : $ --
01D0  3E 20 24 00   31 00 01 21   00 01 11 05   01 CD BE 01   > $.1..!.....M>.
01E0  11 3F 01 CD   BE 01 CD 88   01 32 53 01   3E 20 CD 94   .?.M>.M..2S.> M.
01F0  01 11 4D 01   CD BE 01 3A   53 01 CD B1   01 3A 53 01   ..M.M>.:S.M1.:S.
0200  FD AC 01 5B   00 3E C9 21   CE FF D1 19   77 54 5D 13   },.[.>I!N.Q.wTJ.
0210  ED B0 FD AC   01 FF FF 3E   C9 21 A9 FF   D1 19 77 54   mQ),...>I!).Q.wT
0220  5D 13 ED B0   C9 54 52 45   53 4F 52 20   2D 20 4A 4F   ].mOITRESOR - JO — 27
0230  53 45 46 20   53 45 49 46   45 52 54 20   2D 20 54 52   SEF SEIFERT - TR
0240  45 53 4F 52   FD AC 21 80   00 3E D1 77   23 3E D5 77   ESOR|,!..>Qwi/Ui
0250  23 3E C9 77   CD 80 00 D5   D5 21 ED FF   00 00 00 19   #>IwM..UU!m.....
0260  01 02 01 ED   42 44 4D FD   21 02 01 FD   09 FD 7E 00   ...mBDM}!..}.}~.
0270  FD AC FD AD   EE 5A FD 77   00 0B 78 B1   20 E9 18 BO   }.}-nZ}w..x1 i..
>[R 103]— 46
>[G]
  S V C       A =C9 BC =FFDD DE =0223 HL =0222 SP=C400 PC=0103        JR   0154
             A'=00 BC'=0000 DE'=0000 HL'=0000 IX=0000 IY=0103 I=FF
                                                                47       47a
>[D 100 27F]
0100  CD 44 02 18   4F 0D 0A 20   54 41 53 54   54 45 53 54   MD..O.. TASTTEST
0110  20 28 43 54   4C 2D 43 20   3D 20 45 4E   44 45 29 20   (CTL-C = ENDE)
0120  0D 0A 20 48   45 58 2D 41   55 53 47 41   42 45 20 44   .. HEX-AUSGABE D
0130  45 53 20 54   41 53 54 45   4E 43 4F 44   45 53 24 0D   ES TASTENCODES$.
0140  0A 20 45 49   4E 47 41 42   45 20 3A 20   24 20 2D 2D   . EINGABE : $ --
0150  3E 20 24 00   31 00 01 21   00 01 11 05   01 CD BE 01   > $.1..!.....M>.
0160  11 3F 01 CD   BE 01 CD 88   01 32 53 01   3E 20 CD 94   .?.M>.M..2S.> M.
0170  01 11 4D 01   CD BE 01 3A   53 01 CD B1   01 3A 53 01   ..M.M>.:S.M1.:S.
0180  FE 03 C2 60   01 C3 00 00   E5 D5 C5 0E   01 CD 05 00   ~.B`.C..eUE..M..
0190  C1 D1 E1 C9   E5 D5 C5 0E   02 5F CD 05   00 C1 D1 E1   AQaIeUE.._M..AQa
01A0  C9 E6 0F FE   0A 30 04 C6   30 18 02 C6   37 CD 94 01   If.~.0.F0..F7M..
01B0  C9 F5 0F 0F   0F 0F CD A1   01 F1 CD A1   01 C9 0E 09   Iu....M!.qM!.I..
01C0  CD 05 00 C9   4E 47 41 42   45 20 3A 20   24 20 2D 2D   M..INGABE : $ --
01D0  3E 20 24 00   31 00 01 21   00 01 11 05   01 CD BE 01   > $.1..!.....M>.
01E0  11 3F 01 CD   BE 01 CD 88   01 32 53 01   3E 20 CD 94   .?.M>.M..2S.> M.
01F0  01 11 4D 01   CD BE 01 3A   53 01 CD B1   01 3A 53 01   ..M.M>.:S.M1.:S.
0200  C9 C9 C9 C9   C9 C9 C9 C9   C9 C9 C9 C9   C9 C9 C9 C9   IIIIIIIIIIIIIIII
0210  C9 C9 C9 C9   C9 C9 C9 C9   C9 C9 C9 C9   C9 C9 C9 C9   IIIIIIIIIIIIIIII
0220  C9 C9 C9 B0   C9 C9 C9 C9   C9 C9 C9 C9   C9 C9 C9 C9   IIIIIIIIIIIIIIII — 27
0230  C9 C9 C9 C9   C9 C9 C9 C9   C9 C9 C9 C9   C9 C9 C9 C9   IIIIIIIIIIIIIIII
0240  C9 C9 C9 C9   C9 C9 C9 C9   C9 C9 C9 C9   C9 C9 C9 C9   IIIIIIIIIIIIIIII
0250  C9 C9 C9 C9   C9 C9 C9 C9   C9 C9 C9 C9   C9 C9 C9 C9   IIIIIIIIIIIIIIII
0260  C9 C9 C9 C9   C9 C9 C9 C9   C9 C9 C9 C9   C9 C9 C9 C9   IIIIIIIIIIIIIIII
0270  C9 C9 C9 C9   C7 C9 C9 C9   C9 C9 C9 C9   C9 C9 C9 C9   IIIIIIIIIIIIIIII
>>
```

Fig. 2C

Fig. 3A

```
> D 100 23F                                                        /66            /66a
0100  00 00 00 C9   C9 C9 C9 C9   C9 C9 C9 C9   C9 C9 C9 C9   ...[IIIIIIIIIIIII
0110  C9 C9 C9 C9   C9 C9 C9 C9   C9 C9 C9 C9   C9 C9 C9 C9   IIIIIIIIIIIIIIII
0120  C9 C9 C9 C9   C9 C9 C9 C9   C9 C9 C9 C9   18 4F 0D 0A   IIIIIIIIIIIII.O..
0130  20 54 41 53   54 54 45 53   54 20 28 43   54 4C 2D 43   TASTTEST (CTL-C
0140  20 3D 20 45   4E 44 45 29   20 0D 0A 20   48 45 58 2D   = ENDE) .. HEX-
0150  41 55 53 47   41 42 45 20   44 45 53 20   54 41 53 54   AUSGABE DES TAST
0160  45 4E 43 4F   44 45 53 24   0D 0A 20 45   49 4E 47 41   ENCODES$.. EINGA
0170  42 45 20 3A   20 24 20 2D   2D 3E 20 24   00 31 00 01   BE : $ --> $.1..
0180  21 00 01 11   2E 01 CD E7   01 11 68 01   CD E7 01 CD   !.....Mg..h.Mg.M
0190  B1 01 32 7C   01 3E 20 CD   BD 01 11 76   01 CD E7 01   1.2|.> M=..v.Mg.
01A0  3A 7C 01 CD   DA 01 3A 7C   01 FE 03 C2   89 01 C3 00   :|.MZ.:|.~.B..C.
01B0  00 E5 D5 C5   0E 01 CD 05   00 C1 D1 E1   C9 E5 D5 C5   .eUE..M..AQaIeUE
01C0  0E 02 5F CD   05 00 C1 D1   E1 C9 E6 0F   FE 0A 30 04   .._M..AQaIf.~.O.
01D0  C6 30 18 02   C6 37 CD BD   01 C9 F5 0F   0F 0F 0F CD   FO..F7M=.Iu....M
01E0  CA 01 F1 CD   CA 01 C9 0E   09 CD 05 00   C9 C9 C9 C9   J.oMJ.I..M..I[II
01F0  C9 C9 C9 C9   C9 C9 C9 C9   C9 C9 C9 C9   C9 C9 C9 C9   IIIIIIIIIIIIIIII
0200  C9 C9 C9 C9   C9 C9 C9 C9   C9 C9 C9 C9   C9 C9 C9 C9   IIIIIIIIIIIIIIII
0210  C9 C9 C9 C9   C9 C9 C9 C9   C9 C9 C9 C9   C9 C9 C9 B0   IIIIIIIIIIIIIIIO
0220  C9 C9 C9 C9   C9 C9 C9 C9   C9 C9 C9 C9   C9 C9 C9 C9   IIIIIIIIIIIIIIII
0230  C9 C9 C9 C9   C9 C9 C9 C9   C9 C9 C9 C9   C9 C9 C9 C9   IIIIIIIIIIIIIIII
> .G
```

```
TASTTEST (CTL-C = ENDE)
HEX-AUSGABE DES TASTENCODES
EINGABE : A  --> 41
EINGABE : B  --> 42
EINGABE : C  --> 43
EINGABE :  · --> 03
```

Fig. 3B

19